# EUROPEAN PATENT APPLICATION

(11) **EP 4 411 240 A1**
(43) Date of publication of application: **07.08.2024**
(21) Application number: 24155393.2
(22) Date of filing: 01.02.2024
(51) Int. Cl.: F23R 3/28, F23R 3/12

(54) **COMBINED AIR SWIRLER AND FUEL DISTRIBUTOR**

(30) Priority: 02.02.2023 US 202318104885
(71) Applicant: PRATT & WHITNEY CANADA CORP., Longueuil, Québec J4G 1A1 (CA)
(72) Inventor: McCALDON, Kian, Orangeville, L9W 2X4 (CA)
(74) Representative: Dehns

(57) **Abstract**

A fuel mixture distribution system (35) for a turbine engine assembly (20) includes a combustor (26) that includes a wall (46) defining a combustion chamber (44), a fuel mixture distributor (38; 90) that includes a mixing chamber (52; 85) that extends along an axis (58) between a closed end (54) and an exit opening (56) to the combustion chamber (44), the mixing chamber shape being defined to achieve the desired mixing and prevent flashback at all operating conditions, and a plurality of fuel passages (60) and a plurality of air passages (62) that are disposed about a periphery of the mixing chamber (52; 85) within a common plane (66) transverse to the axis (58). Each of the plurality of fuel passages (60) and each of the plurality of air passages (62) are angled to induce mixing of fuel (40) and air (42) within the mixing chamber (52; 85) prior to flowing through the exit opening (56) into the combustion chamber (44).

## Description

### TECHNICAL FIELD

The present disclosure relates to a fuel mixture distribution system for a gas turbine engine.

### BACKGROUND

A gas turbine engine ignites a mixture of compressed air with fuel in a combustor to generate a high temperature exhaust gas flow. The exhaust gas flow expands through a turbine to generate shaft power that is utilized to drive a propulsor and engine accessory components. Conventional hydrocarbon fuels are introduced into a combustor in a liquid form. The liquid fuel is atomized to induce mixing with the compressed airflow. Alternate, non-carbon based fuels such as hydrogen perform differently during combustion and therefore unconventional combustor/fuel injection arrangements are necessary to ensure a stable combustion process which delivers the desired turbine inlet temperature pattern, starting and durability while minimizing emissions. At the same time, in order to convert an existing engine design to use alternate fuels it is highly desirable to maintain the existing combustor dimensions. This is particularly important in aviation gas turbine engines, as increases in engine size or weight will have consequences for aircraft design.

Aircraft engine manufacturers continue to seek further improvements to engine performance including improvements to durability, emissions and propulsive efficiencies.

### SUMMARY

A fuel mixture distribution system for a turbine engine assembly according to an aspect of the present invention includes a combustor that includes a wall defining a combustion chamber, a fuel mixture distributor that includes a mixing chamber that extends along an axis between a closed end and an exit opening to the combustion chamber, and a plurality of fuel passages and a plurality of air passages that are disposed about a periphery of the mixing chamber within a common plane transverse to the axis. Each of the plurality of fuel passages and each of the plurality of air passages are angled to induce mixing of fuel and air within the mixing chamber prior to flowing through the exit opening into the combustion chamber.

In an embodiment, the system further comprises at least one annular shaped fuel supply passage for communicating a fuel flow to each of the plurality of fuel passages.

In an embodiment according to any of the previous embodiments, the mixing chamber includes a peripheral wall and the annular shaped fuel supply passage is disposed within the peripheral wall.

In an embodiment according to any of the previous embodiments, the plurality of air passages extends through the peripheral wall of the mixing chamber.

In an embodiment according to any of the previous embodiments, the plurality of fuel passages alternates with the plurality of air passages about a circumference of the mixing chamber.

In an embodiment according to any of the previous embodiments, each of the plurality of air passages are disposed about an individual air passage axis that is disposed at a non-normal angle relative to a line tangent to a periphery of the mixing chamber.

In an embodiment according to any of the previous embodiments, each of the plurality of fuel passages are disposed about an individual fuel passage axis that is disposed at a normal angle relative to a line tangent to the periphery of the mixing chamber.

In an embodiment according to any of the previous embodiments, the system further comprises a plurality of fuel mixture distributors for introducing a fuel air mixture into the combustor chamber.

In an embodiment according to any of the previous embodiments, the mixing chamber shape is defined to achieve the desired mixing and prevent flashback at all operating conditions.

A combustor for a turbine engine according to another aspect of the present invention includes a combustor that defines a combustion chamber, a fuel mixture distributor that includes a mixing chamber that extends along an axis between a closed end and an exit opening to the combustion chamber, and a plurality of fuel passages and a plurality of air passages are disposed about a periphery of the mixing chamber within a common plane transverse to the axis. Each of the plurality of fuel passages and each of the plurality of air passages are angled to induce mixing of fuel and air within the mixing chamber prior to flowing through the exit opening into the combustion chamber.

In an embodiment, the combustor further comprises at least one annular shaped fuel supply passage for communicating a fuel flow to each of the plurality of fuel passages.

In an embodiment according to any of the previous embodiments, the mixing chamber includes a peripheral wall and the annular shaped fuel supply passage is disposed within the peripheral wall.

In an embodiment according to any of the previous embodiments, the plurality of air passages extend through the peripheral wall of the mixing chamber.

In an embodiment according to any of the previous embodiments, each of the plurality of air passages are disposed about an individual air passage axis that is disposed at a non-normal angle relative to a line tangent to a periphery of the mixing chamber.

In an embodiment according to any of the previous embodiments, each of the plurality of fuel passages are disposed about an individual fuel passage axis that is disposed at a normal angle relative to a line tangent to the periphery of the mixing chamber.

In an embodiment according to any of the previous embodiments, the mixing chamber shape is defined to achieve the desired mixing and prevent flashback at all operating conditions.

A turbine engine assembly according to another aspect of the present invention includes a compressor section that is in flow series with a turbine section, a combustor that is disposed in flow series between the compressor section and turbine section, the combustor includes walls that define a combustion chamber, at least one fuel mixture distributor that is disposed at an end of the combustion chamber for mixing and communicating a fuel mixture into the combustion chamber, the fuel mixture distributor includes a mixing chamber that extends along an axis between a closed end and an exit opening to the combustion chamber, and a plurality of fuel passages and a plurality of air passages that are disposed about a periphery of the mixing chamber within a common plane transverse to the axis. Each of the plurality of fuel passages and each of the plurality of air passages are angled to induce mixing of fuel and air within the mixing chamber prior to flowing through the exit opening into the combustion chamber.

In an embodiment, the mixing chamber includes a peripheral wall and an annular shaped fuel supply passage in communication with the plurality of fuel passages is disposed within the peripheral wall.

In an embodiment according to any of the previous embodiments, the plurality of air passages extends through the peripheral wall of the mixing chamber.

In an embodiment according to any of the previous embodiments, each of the plurality of air passages are disposed about an individual air passage axis that is disposed at a non-normal angle relative to a line tangent to a periphery of the mixing chamber.

In an embodiment according to any of the previous embodiments, each of the plurality of fuel passages are disposed about an individual fuel passage axis that is disposed at a normal angle relative to a line tangent to the periphery of the mixing chamber.

In an embodiment according to any of the previous embodiments, the turbine engine assembly further includes a fuel system supplying a hydrogen fuel to the fuel mixture distributor.

In an embodiment according to any of the previous embodiments, the mixing chamber shape is defined to achieve the desired mixing and prevent flashback at all operating conditions.

Although the different examples have the specific components shown in the illustrations, embodiments of this disclosure are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example turbine engine embodiment.
Figure 2 is a simplified schematic view of an example combustor section.
Figure 3 is an enlarged schematic view of an example fuel distributor embodiment.
Figure 4 is a schematic view of cross-section of a portion of the example fuel distributor.
Figure 5 is an enlarged schematic view of another example fuel distributor embodiment.

### DETAILED DESCRIPTION

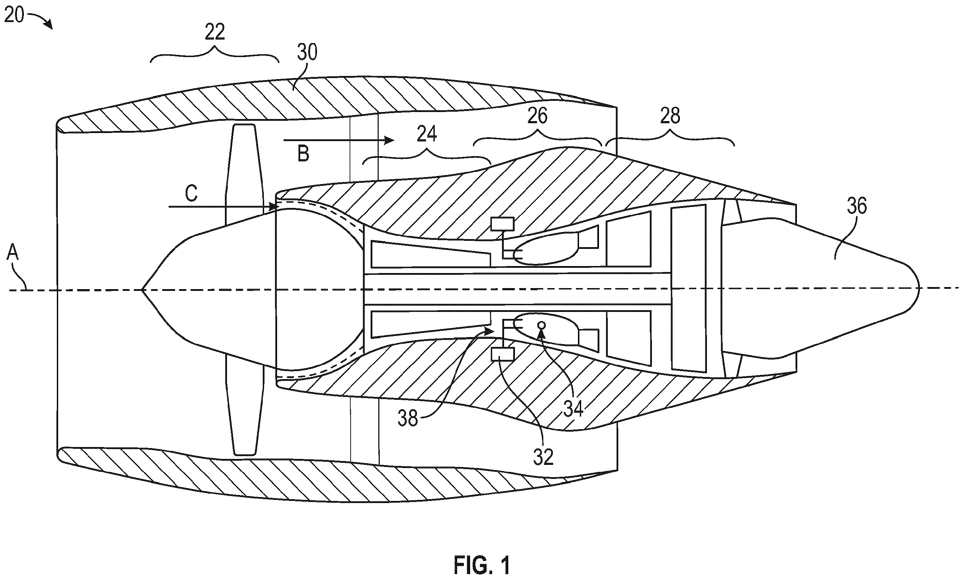

Figure 1 schematically illustrates a gas turbine engine 20. The example gas turbine engine 20 is a turbofan that generally incorporates a fan section 22, a compressor section 24, a combustor section 26 and a turbine section 28. The fan section 22 drives air along a bypass flow path B in a bypass duct defined within a nacelle 30. The turbine engine 20 intakes air along a core flow path C into the compressor section 24 for compression and communication into the combustor section 26. In the combustor section 26, the compressed air is mixed with fuel from a fuel system 32 and burnt to generate an exhaust gas flow that expands through the turbine section 28 and is exhausted through exhaust nozzle 36. An igniter 34 is provided to assist with initiating combustion during engine start up. Although depicted as a turbofan turbine engine in the disclosed non-limiting embodiment, it should be understood that the concepts described herein are not limited to use with turbofans as the teachings may be applied to other types of turbine engines. As one example, rather than having the propulsor be an enclosed fan, the propulsor may be an open propeller.

Conventional hydrocarbon fuels are introduced into a combustor in a liquid form that is atomized to induce mixing with air. Alternative, non-carbon based fuels perform differently during combustion and therefore unconventional combustor/fuel injector arrangements are necessary to ensure a stable combustion process which delivers the desired turbine inlet temperature pattern, starting and durability while minimizing emissions. The disclosed example engine is designed to use gaseous hydrogen fuel. While it is possible to introduce hydrogen into the combustor in liquid form, hydrogen is more commonly introduced in a gas phase in gas turbine combustors in order to maintain stable combustion across the wide range of operating conditions required for an aviation gas turbine. As a gaseous fuel, hydrogen has a wider range of flammability and a higher flame velocity than conventional liquid fuels used in gas turbine engines, this results in changes in the flame pattern within the combustor which may influence the engine durability, starting, or emissions.

Accordingly, the example combustor section 26 includes features tailored to operation using hydrogen fuel including a fuel distributor 38 that induces mixing of the gaseous fuel and air to provide efficient combustion.

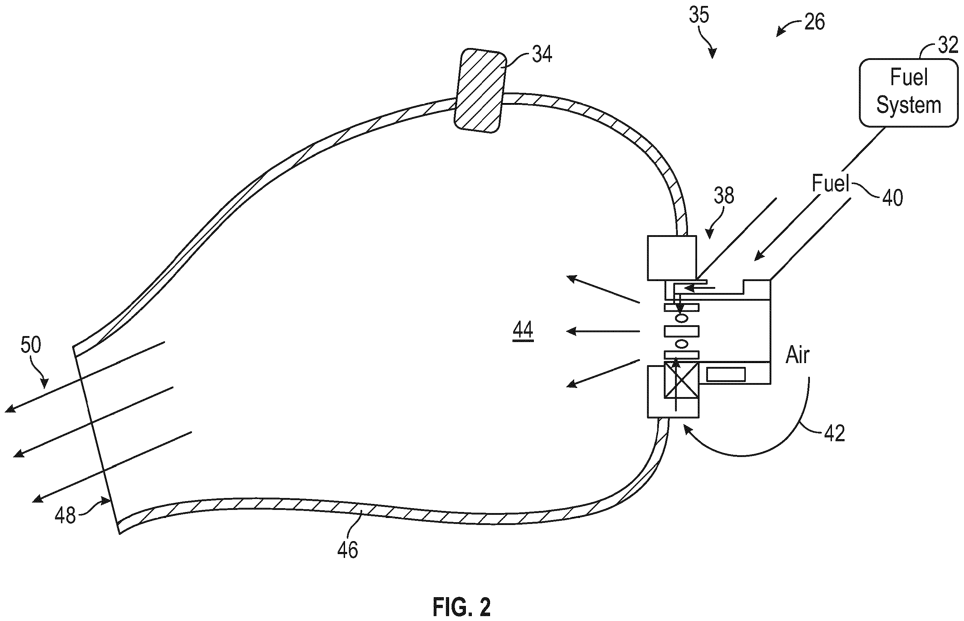

Referring to Figure 2, a fuel distribution system 35 includes the combustor section 26 is shown schematically and includes a combustion chamber 44 defined within combustor walls 46 and a fuel distributor 38. The fuel distributor 38 is mounted opposite a combustor outlet 48. The fuel distributor 38 mixes a gas fuel flow 40 with an airflow 42 prior to flowing into a combustion chamber 44. The ignited mixed air and fuel flow is ignited to generate the exhaust gas flow 50. The fuel distributor 38 further induces a swirling mixing flow on the fuel/air mixture as it is communicated into the combustion chamber 44. The air and fuel flows are tailored in conjunction with the combustor holes to provide stable combustion and minimized emissions across the range of engine operating conditions, as well as good starting when ignited by the igniter 34. One fuel distributor 38 is shown by way of example, but more than one fuel distributor 38 would be utilized and spaced apart to distribute fuel and air around the circumference of the engine.

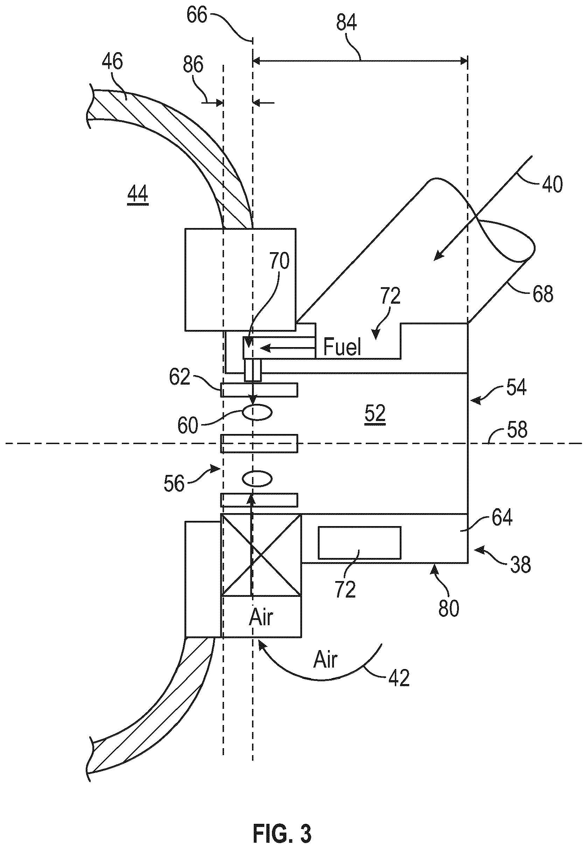

Referring to Figure 3, the example fuel distributor 38 includes a mixing chamber 52 extending along an axis 58 between a closed end 54 and an exit opening 56 to the combustion chamber 44. A plurality of fuel outlet passages 60 are supplied with fuel by a supply passage 68. The supply passage 68 communicates fuel to an annular passage 72 disposed about the mixing chamber 52. The annular passage 72 is in communication with axial fuel passage 70 that in turn provides fuel flow to the fuel outlet passages 60. In this example embodiment, the fuel flow is provided in a gaseous form. The mixing chamber 52 is defined within a housing 64 and the annular passage 72 and the axial fuel passage 70 are formed within peripheral walls 80 of the housing 64. The annular passage 72 extends about the housing 64 and communicates fuel to a plurality of axial passages 70 corresponding to each of the fuel outlet passages 60.

A plurality of air passages 62 are disposed about the mixing chamber 52 between adjacent fuel outlet passages 60. The fuel outlet passages 60 and the air passages 62 are disposed within a common plane 66 transverse to the axis 58 of the mixing chamber 52. Each of the plurality of fuel outlet passages 60 and each of the plurality of air passages 62 are angled to induce mixing of fuel 40 and air 42 within the mixing chamber 52 prior to flowing through the exit opening 56 into the combustion chamber 44.

The common plane 66 within which the fuel outlet passages 60 and air passages 62 are positioned is spaced an axial distance 86 from the exit opening 56 and an axial distance 84 from the closed end 54. Normally the closed end would be adjacent to the edge of the swirler, however, should there be a desire for additional air flow, it may be introduced through the closed end. The spacing to the exit opening 56 provides for the mixing of fuel and air induced by the angular orientation of the fuel outlet passages 60 and the air passages to be complete and to carry into the combustion chamber 44. The axial spacing 86 is configured to provide a desired amount of mixing before entering the combustion chamber 44 while the area for flow is designed to mitigate flashback from the combustion chamber 44.

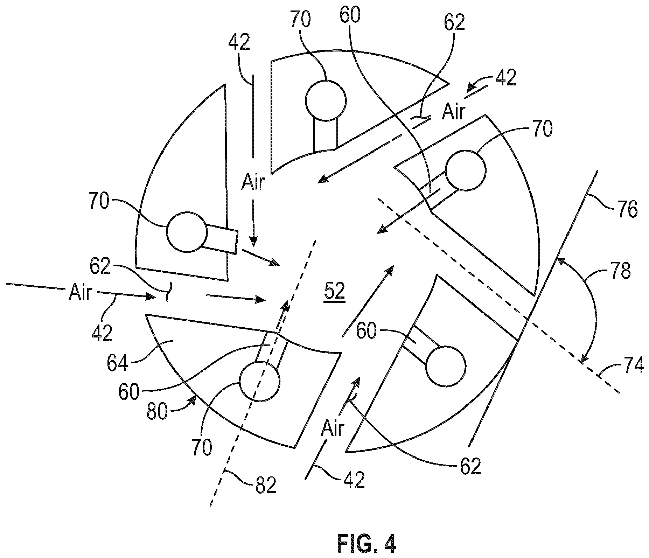

Referring to Figure 4, with continued reference to Figure 3, the air passages 62 extend entirely through the peripheral wall 80 of the housing 64 into the mixing chamber 52. The fuel passages 60 alternate with the air passages 62 about a circumference of the housing 64 and the mixing chamber 52. Each of the plurality of air passages 62 are disposed about an individual air passage axis 74. The air passages 62 are angled to provide a mixing and swirling flow in the mixing chamber 52. An angle 78 of the passage axis 74 for the air passages 62 can be described in one disclosed example as a non-normal angle relative to a line 76 tangent to the outer periphery wall 80 of the housing. 64. The angle 78 may be of any angle that induces a predefined swirling motion within the mixing chamber 52. The swirling flow provides a desired complete mixing of fuel and air into a mixture that is introduced into the combustor chamber 44.

The example fuel outlet passages 60 are disposed about an individual fuel passage axis 82 that is provided to inject fuel into the mixing airflow 42. The fuel passage axis 82 may be normal to the inner surface or angled to induce a swirling flow in the fuel. The different angles of the fuel passages 60 and the airflow passages 62 provide for a complete mixing between the gaseous fuel and the air flow. In one example embodiment, a cross-sectional flow area of any of the air passages 62 is much larger than a cross-sectional flow area of the fuel passages 60.

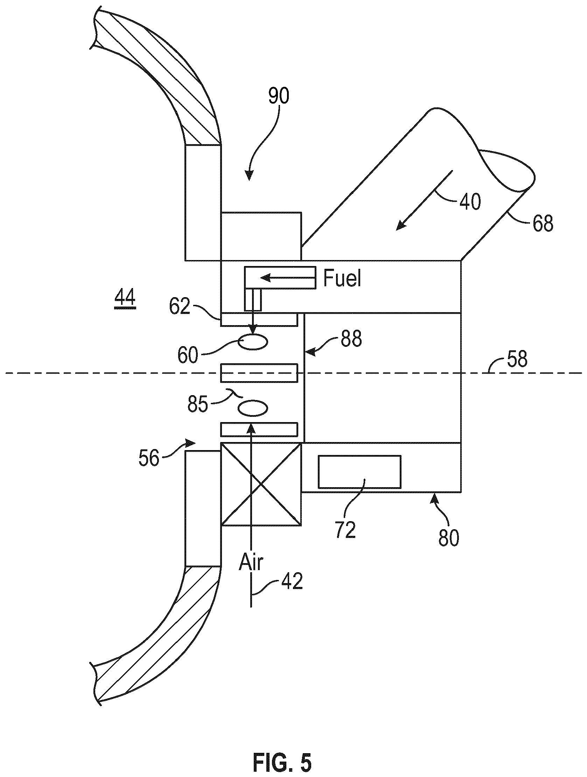

Referring to Figure 5, another example fuel distributor 90 is shown that includes an axially shorter mixing chamber 85 than the previously described distributor 38. In this example embodiment, a back wall 88 is disposed at an axial location that is proximate an end of the air passages 62. The air passages 62 are arranged as shown in Figure 4 to generate a swirling air flow that mixes with the fuel flow.

The example fuel distributors 38, 90 are operated at a stochiometric range of between 0.5 and 2. The size and number of air passages 62 and the size and shape of the mixing chamber 85 and fuel passages 60 may be adjusted to provide the desired stochiometric mixture of fuel and air communicated into the combustion chamber 44.

The example fuel distributors 38, 90 provide mixing of air and gaseous fuel prior to being introduced into the combustion chamber 44. Additionally, the example fuel distributors 38, 90 induce a swirling flow in the fuel air mixture to aid in distribution upon entering the combustion chamber 44 to improve combustion operation and efficiency.

A fuel mixture distribution system 35 for a turbine engine assembly 20 according to an exemplary embodiment of this disclosure, among other possible things includes a combustor 26 that includes a wall 46 defining a combustion chamber 44, a fuel mixture distributor 38 that includes a mixing chamber 52 that extends along an axis between a closed end 54 and an exit opening 56 to the combustion chamber 44, the mixing chamber 52 shape being defined to achieve the desired mixing and prevent flashback at all operating conditions, and a plurality of fuel passages 60 and a plurality of air passages 62 that are disposed about a periphery of the mixing chamber 52 within a common plane 66 transverse to the axis 58. Each of the plurality of fuel passages 60 and each of the plurality of air passages 62 are angled to induce mixing of fuel 40 and air 42 within the mixing chamber 52 prior to flowing through the exit opening 56 into the combustion chamber 44.

In a further embodiment of the foregoing, the fuel mixture distributor 38 includes at least one annular shaped fuel supply passage 72 for communicating a fuel flow 40 to each of the plurality of fuel passages 60.

In a further embodiment of any of the foregoing, the mixing chamber 52 includes a peripheral wall 80 and the annular shaped fuel supply passage 72 is disposed within the peripheral wall 80.

In a further embodiment of any of the foregoing, the plurality of air passages 62 extends through the peripheral wall 80 of the mixing chamber 52.

In a further embodiment of any of the foregoing, the plurality of fuel passages 60 alternates with the plurality of air passages 62 about a circumference of the mixing chamber 52.

In a further embodiment of any of the foregoing, each of the plurality of air passages 62 are disposed about an individual air passage axis 74 that is disposed at a non-normal angle 78 relative to a line 76 that is tangent to a periphery of the mixing chamber 52.

In a further embodiment of any of the foregoing, each of the plurality of fuel passages 60 are disposed about an individual fuel passage axis 82 that is disposed at a normal angle relative to a line 76 that is tangent to the periphery of the mixing chamber 52.

In a further embodiment of any of the foregoing, the fuel mixture distribution system 35 includes a plurality of fuel mixture distributors 38 for introducing a fuel air mixture into the combustor chamber 44.

A combustor 26 for a turbine engine 20 according to another exemplary embodiment of this disclosure, among other possible things includes a combustor 26 that defines a combustion chamber 44, a fuel mixture distributor 38 that includes a mixing chamber 52 that extends along an axis 58 between a closed end 54 and an exit opening 56 to the combustion chamber 44, the mixing chamber 52 shape being defined to achieve the desired mixing and prevent flashback at all operating conditions, and a plurality of fuel passages 60 and a plurality of air passages 62 are disposed about a periphery of the mixing chamber 52 within a common plane 66 transverse to the axis 58. Each of the plurality of fuel passages 60 and each of the plurality of air passages 62 are angled to induce mixing of fuel 40 and air 42 within the mixing chamber 52 prior to flowing through the exit opening 56 into the combustion chamber 44.

In a further embodiment of the foregoing, the combustor 26 includes at least one annular shaped fuel supply passage 72 for communicating a fuel flow 40 to each of the plurality of fuel passages 60.

In a further embodiment of any of the foregoing, the mixing chamber 52 includes a peripheral wall 80 and the annular shaped fuel supply passage 72 is disposed within the peripheral wall 80.

In a further embodiment of any of the foregoing, the plurality of air passages 62 extends through the peripheral wall 80 of the mixing chamber 52.

In a further embodiment of any of the foregoing, each of the plurality of air passages 62 are disposed about an individual air passage axis 74 that is disposed at a non-normal angle relative to a line 76 that is tangent to a periphery of the mixing chamber 52.

In a further embodiment of any of the foregoing, each of the plurality of fuel passages 60 are disposed about an individual fuel passage axis 82 that is disposed at a normal angle relative to a line 76 that is tangent to the periphery of the mixing chamber 52.

A turbine engine assembly according to another exemplary embodiment of this disclosure, among other possible things includes a compressor section that is in flow series with a turbine section, a combustor 26 that is disposed in flow series between the compressor section and turbine section, the combustor 26 includes walls that define a combustion chamber 44, at least one fuel mixture distributor 38 that is disposed at an end of the combustion chamber 44 for mixing and communicating a fuel mixture into the combustion chamber 44, the fuel mixture distributor 38 includes a mixing chamber 52 that extends along an axis 58 between a closed end 54 and an exit opening 56 to the combustion chamber 44, the mixing chamber 52 shape being defined to achieve the desired mixing and prevent flashback at all operating conditions, and a plurality of fuel passages 60 and a plurality of air passages 62 that are disposed about a periphery of the mixing chamber 52 within a common plane 66 transverse to the axis 58. Each of the plurality of fuel passages 60 and each of the plurality of air passages 62 are angled to induce mixing of fuel 40 and air 42 within the mixing chamber 52 prior to flowing through the exit opening 56 into the combustion chamber 44.

In a further embodiment of the foregoing, the mixing chamber 52 includes a peripheral wall 80 and an annular shaped fuel supply passage 72 in communication with the plurality of fuel passages 60 is disposed within the peripheral wall 80.

In a further embodiment of any of the foregoing, the plurality of air passages 62 extends through the peripheral wall 80 of the mixing chamber 52.

In a further embodiment of any of the foregoing, each of the plurality of air passages 62 are disposed about an individual air passage axis 74 that is disposed at a non-normal angle 78 relative to a line 76 that is tangent to a periphery of the mixing chamber 52.

In a further embodiment of any of the foregoing, each of the plurality of fuel passages 60 are disposed about an individual fuel passage axis 82 that is disposed at a normal angle relative to a line 76 that is tangent to the periphery of the mixing chamber 52.

In a further embodiment of any of the foregoing, the turbine engine 20 further includes a fuel system 32 that supplies a hydrogen fuel to the fuel mixture distributor 38.

Although an example embodiment has been disclosed, a worker of ordinary skill in this art would recognize that certain modifications would come within the scope of this disclosure. For that reason, the following claims should be studied to determine the scope and content of this disclosure.

## Claims

1. A fuel mixture distribution system (35) for a turbine engine assembly (20) comprising:
the combustor (26) of any preceding claim including a wall (46) defining a combustion chamber (44);
a fuel mixture distributor (38; 90) including a mixing chamber (52; 85) extending along an axis (58) between a closed end (54) and an exit opening (56) to the combustion chamber (44), and a plurality of fuel passages (60) and a plurality of air passages (62) disposed about a periphery of the mixing chamber (52; 85) within a common plane (66) transverse to the axis (58), each of the plurality of fuel passages (60) and each of the plurality of air passages (62) are angled to induce mixing of fuel (40) and air (42) within the mixing chamber (52; 85) prior to flowing through the exit opening (56) into the combustion chamber (44).

2. The fuel mixture distribution system (35) as recited in claim 1, including at least one annular shaped fuel supply passage (72) for communicating a fuel flow (40) to each of the plurality of fuel passages (60).

3. The fuel mixture distribution system (35) as recited in claim 2, wherein the mixing chamber (52; 85) includes a peripheral wall (80) and the annular shaped fuel supply passage (72) is disposed within the peripheral wall (80).

4. The fuel mixture distribution system (35) as recited in claim 1, 2 or 3, wherein the plurality of air passages (62) extends through a/the peripheral wall (80) of the mixing chamber (52; 85).

5. The fuel mixture distribution system (35) as recited in any preceding claim, wherein the fuel passages (60) alternate with the air passages (62) about a circumference of the mixing chamber (52; 85).

6. The fuel mixture distribution system (35) as recited in any preceding claim, wherein each of the plurality of air passages (62) is disposed about an individual air passage axis (74) that is disposed at a non-normal angle (78) relative to a line (76) tangent to a periphery of the mixing chamber (52; 85).

7. The fuel mixture distribution system (35) as recited in any preceding claim, wherein each of the plurality of fuel passages (60) is disposed about an individual fuel passage axis (82) that is disposed at a normal angle relative to a line (76) tangent to the periphery of the mixing chamber (52; 85).

8. The fuel mixture distribution system (35) as recited in any preceding claim, including a plurality of fuel mixture distributors (38; 90) for introducing a fuel air mixture into the combustor chamber (44).

9. The fuel mixture distribution system (35) as recited in any preceding claim, wherein the mixing chamber shape is defined to achieve the desired mixing and prevent flashback at all operating conditions.

10. A turbine engine assembly (20) comprising;
a compressor section (24) in flow series with a turbine section (28);
the combustor (26) of any preceding claim disposed in flow series between the compressor section (24) and turbine section (28).

11. The turbine engine (20) as recited in claim 10, further including a fuel system (32) supplying a hydrogen fuel to the fuel mixture distributor (38; 90).
